# FASCICULE DE BREVET EUROPEEN

(11) **EP 0 635 598 B1**
(45) Date de publication et mention de la délivrance du brevet: **09.09.1998**
(21) Numéro de dépôt: 94420203.5
(22) Date de dépôt: 12.07.1994
(51) Int. Cl.: D21B 1/32, D21C 5/02

(54) **Procédé de désencrage de papiers de récupération**
Verfahren zur Entfärbung von Altpapier
Process for de-inking waste paper

(30) Priorité: 19.07.1993 FR 9309143
(43) Date de publication de la demande: 25.01.1995
(73) Titulaire: Papeteries Matussière et Forest, Société Anonyme dite:, F-38240 Meylan (FR)
(72) Inventeur: Floccia, Louis, F-38640 Claix (FR); Hess, Oliver, D-72581 Dettingen (DE)
(74) Mandataire: Maureau, Philippe

(56) Documents cités:
- EP-A- 0 514 901
- EP-A- 0 581 631

## Description

La présente invention a pour objet un procédé de désencrage de papiers de récupération.

Les procédés conventionnels de désencrage trouvent leur application dans le traitement de pâtes à papiers de fibres courtes. Il s'agit notamment de traiter des papiers, tels que vieux journaux, magazines, illustrés, listings, et éventuellement photocopies.

Ces matières premières sont essentiellement constituées de fibres courtes, et de charges minérales.

De ce fait, les papiers fabriqués à partir de pâtes désencrées, nécessitent presque toujours l'ajout de fibres longues chimiques, et leur utilisation est limitée essentiellement à la réalisation de papier journal.

En triant les vieux papiers ou en utilisant certains procédés de séparation, il est possible de faire des pâtes plus solides. Cependant, certaines matières de base utilisées dans de tels cas, tels que listings d'ordinateurs, sont de plus en plus rares, car ils sont maintenant fréquemment réalisés à partir de papiers recyclés c'est-à-dire ne contenant pas de fibres longues.

Le document EP-A-0 514 901 concerne un procédé de désencrage correspondant au préambule de la revendication 1.

Le but de l'invention est de fournir un procédé de désencrage de papiers de récupération qui permette d'obtenir une pâte susceptible de nombreuses applications, compte tenu de ses bonnes qualités de résistance, et qui s'applique à des papiers dont la source d'approvisionnement ne risque pas de poser de problèmes particuliers.

A cet effet, le procédé qu'elle concerne consiste à partir d'un mélange de papiers dont au moins une partie contient des fibres longues, à broyer et diluer ces papiers dans l'eau, afin d'obtenir une pâte de faible concentration, de l'ordre de 1 %, à réaliser sur cette pâte une première opération de désencrage suivant une technique traditionnelle, par exemple par mise en oeuvre d'agents moussants sous un pH basique, à épaissir la pâte jusqu'à une concentration de 30 à 40 %, à introduire cette pâte dans un réacteur en présence d'ozone, à pH acide, la réaction du mélange de papiers en pâte avec l'ozone étant réalisée à une température de l'ordre de 30 à 40°C à pH de l'ordre de 3, à diluer la pâte et à la faire passer sur un filtre laveur au niveau duquel l'encre est récupérée sous forme de grumeaux.

Le mélange de départ contient au moins 10 % en poids de papiers à fibres longues, tels que des sacs d'emballages ou du carton ondulé. Il est intéressant que ces fibres longues soient des fibres écrues contenant de la lignine.

Il est, par exemple, possible de réaliser un mélange de papiers contenant environ un tiers de vieux journaux, un tiers de magazines ou illustrés, et un tiers de sacs d'emballage ou de carton ondulé. Il s'agit d'un mélange qui est très facile à obtenir et dont les sources ne risquent pas de s'épuiser, car les trois catégories de papiers précitées sont très largement utilisées et demeureront très largement utilisées.

La première opération de désencrage, réalisée de façon traditionnelle, est importante car de nombreuses caisses en carton sont déjà elles-mêmes fabriquées avec des proportions importantes de papiers recyclés à partir de magazines. Il convient donc de réaliser non pas un désencrage à proprement parler, mais un éclaircissement du mélange.

Après cette opération, la pâte subit un épaississage pour amener sa consistance à une concentration de 30 à 40 % à température normale. Cette pâte épaissie est ensuite introduite dans un réacteur en présence d'ozone, par exemple amené en mélange avec de l'oxygène, à une température de 30 à 40°C, à un pH de 3 obtenu par adjonction d'acide sulfurique.

La réaction avec l'ozone est quasi instantanée. La pâte est diluée et passée sur un filtre laveur.

L'action de l'ozone favorise le détachement de l'encre vis-à-vis des fibres, cette encre se rassemblant en grumeaux et en amas qu'il est facile de laver et d'éliminer. Il peut être noté que la présence de la pâte écrue contenant de la lignine assure une protection de la pâte contre l'attaque oxydante violente de l'ozone. En effet, si l'on ne disposait pas de cette protection due à la lignine, les fibres courtes seraient détériorées et leurs dimensions encore réduites. Les éléments à fibres longues jouent donc un double rôle, qui est un rôle de protection des fibres courtes lors de la réaction avec l'ozone, et de structuration de la pâte à papier obtenue.

Après la réaction avec l'ozone, suivie d'un lavage, la pâte subit des opérations ultérieures conventionnelles de blanchiment, par exemple à l'aide de peroxyde, en une ou deux étapes.

Il est ainsi obtenu un papier qui peut être utilisé à diverses fins, pour l'impression ou pour l'écriture par exemple.

Deux exemples de mise en oeuvre de ce procédé sont donnés ci-après :

### Exemple 1 -

On prend un mélange à parts sensiblement égales, de vieux papiers type A4 et A6 (suivant classification CEPAC Confédération Européenne des industries de pâtes PApier et Carton). Ces vieux papiers contiennent des fibres de pâtes chimiques blanchies et écrues, et des pâtes de bois. Ces vieux papiers sont constitués essentiellement de sorte qu'il est d'usage de qualifier de "post-consumer", ce qui veut dire qu'ils ont, antérieurement à leur recyclage, servi à emballer, suremballer des produits très variés ; ils contiennent aussi des journaux et des magazines.

Le mélange ainsi constitué à parts égales -ou sensiblement égales-, est introduit dans un pulper discontinu renforcé, a une concentration de travail de 15 %. La température est soigneusement réglée à la valeur maximum de 32°C. Le pH est ajusté à 11,8 par addition de soude. On introduira au même moment 1,6 % de peroxyde, 0,8 % d'acides gras, et un complexant type EDTA à raison de 0,3 %. Les pourcentages indiqués sont rapportés à la teneur en matières sèches de la pâte.

Le temps de mise en suspension est de 20 minutes sous agitation. La pâte est diluée à 7 %, et elle macère dans une tour descendante pendant deux heures.

Elle est épurée à une concentration de 4 %, à travers des matériels conventionnels, puis elle est diluée à 1 % et flottée dans une ligne de neuf cellules primaires et deux secondaires.

La pâte ainsi flottée, est épaissie à 35 % de siccité. Elle est acidifiée dans un mélangeur à un pH de 3,8 par de l'acide sulfurique. Elle est introduite dans un mélangeur-disperseur situé sur la même ligne, et on introduit alors un mélange d'ozone-oxygène à raison de 1,2 % d'ozone actif par rapport à la pâte sèche. La proportion d'ozone par rapport à l'oxygène est de 13 %.

Le mélangeur- disperseur est refroidi en continu par circulation d'eau froide à 15 à 20°C, dans un dispositif du type double enveloppe.

La pâte homogénéisée et au contact du mélange réactif tombe aussitôt dans une tour de réaction comportant à la base un racleur de pâte, et à son sommet une crépine de récupération de gaz usés. Ces gaz usés sont récupérés, épurés, et enrichis en Oxygène, pour être réintroduit dans le process.

Le temps de réaction mélangeur-disperseur-tour de réaction est de 7 minutes.

La pâte est diluée en continu, en deux stades successifs (de 35 % à 4,5 %, puis de 4,5 % à 1 %). Cette pâte est neutralisée au premier stade, puis portée à nouveau à un pH basique de 9 au deuxième stade.

La pâte est alors introduite dans une ligne de flottation de sept cellules primaires, identiques à celles mentionnées lors de la première flottation. La ligne comporte également deux cellules secondaires.

La flottaison sera favorisée par introduction de tensio-actifs non-ioniques du type éthoxylates.

La pâte flottée est épurée à travers un dispositif conventionnel de trous et fentes et épurateur de particules légères et collantes.

La pâte est épaissie à 15 % et blanchie en deux stades par exemple par 3 puis 1 % de peroxyde d'hydrogène, à pH 10,5 et température de 65°C, temps 2 heures.

Le mélange initial est écru, d'une teinte marron-jaune, tout à fait caractéristique d'un fort pourcentage de vieux papiers non-blanchis. La "blancheur" est de 42.

Après traitement suivant le processus décrit, la blancheur atteint 65. La pâte ainsi obtenue peut être utilisée pour la fabrication de journal de qualité convenable.

### Exemple 2 -

On utilise des vieux papiers constitués essentiellement des sortes A6, A7, contenant environ 5 % de sorte B4. Ces matières premières, provenant de collectes sélectives, sont contaminées fortement par la présence de papiers pour cartons ondulés, à raison de 15 % en poids par rapport au mélange A-6, A7 et B4.

Le mélange est mis en suspension, en présence de 1,5 % de persulfate de soude, à une température de 28°C, pendant 25 minutes dans un pulper à 17 % de concentration. On aura aussi introduit 1,1 % de savon conventionnel, et 0,2 % d'EDTA.

La pâte est flottée à 1 %, puis épaissie à 38 % de siccité après acidification à pH 3,5 par de l'acide sulfurique. Afin d'éviter le noircissement de la pâte ainsi épaissie et acidifiée, on dilue l'acide, et on a une concentration finale d'environ 34 %.

La pâte est alors mise en présence d'un mélange d'ozone et d'air, à raison de 0,8 % d'ozone par rapport à la pâte. Le contact pâte-ozone se fait dans un réacteur constitué d'un homogénéisateur-disperseur rapide. La pâte réagira instantanément, la réaction d'épuisement de l'ozone se faisant dans une tour de taille réduite, afin que le temps de transit ne dépasse pas 3 minutes.

La pâte ainsi traitée est diluée soigneusement en deux temps, à raison de 34/5 puis 5/1. La pâte est lavée soigneusement à 1 % sur une batterie de filtres rotatifs. Puis le pH est ajusté à 7,5. La pâte ainsi obtenue est flottée en présence de tensio-actifs non-ioniques. Epaissie à nouveau, on blanchira en deux temps en présence de peroxyde à une concentration de 15 %, à une température de 60°C, temps de contact 3 heures, 3 puis 2 % de réactif par rapport à la pâte.

La blancheur initiale est de 45. La blancheur finale obtenue est de 70. La pâte contenant environ 20 % de fibres longues, peut convenir pour la fabrication de papiers d'impression-écriture, du type journal amélioré.

Comme il ressort de ce qui précède, l'invention apporte une grande amélioration à la technique existante en fournissant un procédé de désencrage réalisé sur un mélange de papiers dont l'approvisionnement est simple, et fournissant une pâte contenant des fibres longues, c'est-à-dire pouvant convenir à de nombreuses utilisations.

Comme il va de soi, l'invention ne se limite pas aux seuls modes de mise en oeuvre de ce procédé, décrits ci-dessus à titre d'exemples ; elle en embrasse, au contraire, toutes les variantes.

## Revendications

1. Procédé de désencrage de papiers de récupération, qui consiste à partir d'un mélange de papiers dont au moins une partie contient des fibres longues, à broyer et diluer ces papiers dans l'eau, afin d'obtenir une pâte de faible concentration, de l'ordre de 1 %, à réaliser sur cette pâte une première opération de désencrage suivant une technique traditionnelle, par exemple par mise en oeuvre d'agents moussants sous un pH basique, à épaissir la pâte jusqu'à une concentration de 30 à 40 %, caractérisé en ce que la pâte est introduite dans un réacteur en présence d'ozone, à pH acide, la réaction du mélange de papiers en pâte avec l'ozone étant réalisée à une température de l'ordre de 30 à 40°C à pH de l'ordre de 3, à diluer la pâte et à la faire passer sur un filtre laveur au niveau duquel l'encre est récupérée sous forme de grumeaux.

2. Procédé selon la revendication 1, caractérisé en ce qu'il consiste à mettre en oeuvre au moins 10 % en poids du mélange de papiers, sous forme de papiers à fibres longues, tels que des sacs d'emballage ou du carton ondulé.

3. Procédé selon l'une quelconque des revendications 1 et 2, caractérisé en ce qu'il consiste à mettre en oeuvre un mélange de papiers dont au moins certains comportent des fibres longues écrues contenant de la lignine.

4. Procédé selon l'une quelconque des revendications 1 à 3, caractérisé en ce que le mélange de papiers contient environ un tiers de vieux journaux, un tiers de magazines ou illustrés, et un tiers de sacs d'emballage ou de carton ondulé.

5. Procédé selon la revendication 1, caractérisé en ce que, lors de la réaction du mélange de papiers en pâte avec l'ozone, le pH est abaissé à la valeur souhaitée par adjonction d'acide sulfurique.

6. Procédé selon l'une quelconque des revendications 1 à 5, caractérisé en ce qu'en vue de la réaction du mélange de papiers en pâte avec l'ozone, l'ozone est introduit dans le réacteur en mélange avec de l'oxygène.

## Patentansprüche

1. Verfahren zum Entfärben von Altpapier, welches umfaßt,
daß man von einem Gemisch aus Papieren ausgeht, von denen mindestens ein Teil lange Fasern enthält, diese Papiere zerkleinert und mit Wasser verdünnt, um einen Brei einer schwachen Konzentration im Bereich von 1 % zu erhalten, diesen Brei einem ersten Entfärbungsvorgang gemäß einem herkömmlichen Verfahren unterzieht, beispielsweise durch Verwendung von Treibmitteln bei einem basischen pH-Wert, den Brei bis zu einer Konzentration von 30 bis 40 % verdickt,
dadurch gekennzeichnet,
daß man den Brei bei saurem pH-Wert in Gegenwart von Ozon in einen Reaktor einbringt, wobei man die Reaktion des Papierbreigemisches mit Ozon bei einer Temperatur im Bereich von 30 bis 40 °C und einem pH-Wert im Bereich von 3 ablaufen läßt, den Brei verdünnt und durch einen Waschfilter leitet, wo die Farbe als Klümpchen rückgewonnen wird.

2. Verfahren nach Anspruch 1,
dadurch gekennzeichnet,
daß es umfaßt, daß man mindesten 10 Gewichtsprozent des Papiergemisches in Form von langfaserigen Papieren verwendet, wie etwa Verpackungstüten oder Wellpappe.

3. Verfahren nach nach Anspruch 1 oder 2,
dadurch gekennzeichnet,
daß es umfaßt, daß man ein Gemisch aus Papieren verwendet, von denen mindestens einige lange, ungebleichte, ligninhaltige Fasern enthalten.

4. Verfahren nach einem der Ansprüche 1 bis 3,
dadurch gekennzeichnet,
daß das Papiergemisch ungefähr ein Drittel alte Zeitungen, ein Drittel Zeitschriften oder Illustrierte und ein Drittel Verpackungstüten oder Wellpappe enthält.

5. Verfahren nach Anspruch 1,
dadurch gekennzeichnet,
daß man bei der Reaktion des Papierbreigemisches mit dem Ozon den pH-Wert durch die Zugabe von Schwefelsäure auf den gewünschten Wert absenkt.

6. Verfahren nach einem der Ansprüche 1 bis 5,
dadurch gekennzeichnet,
daß man zur Reaktion des Papierbreigemisches mit dem Ozon das Ozon als Gemisch mit Sauerstoff in den Reaktor einbringt.

## Claims

1. Process for de-inking waste paper, which consists in starting from a mixture of papers, at least part of which contains long fibres, in pounding and diluting these papers in water in order to obtain a pulp of low concentration, of the order of 1%, in carrying out a first de-inking operation on this pulp in accordance with a traditional technique, for example by utilising foaming agents under a basic pH, in thickening the pulp to a concentration of 30 to 40%, characterised in that the pulp is introduced into a reactor in the presence of ozone at acid pH, the reaction of the mixture of papers in pulp form with the ozone being carried out at a temperature of the order of 30 to 40°C at a pH of the order of 3, in diluting the pulp and in passing it over a washing filter, at the level of which the ink is recovered in the form of curds.

2. Process according to claim 1, characterised in that it consists in utilising at least 10% by weight of the mixture of papers, in the form of papers with long fibres, such as packaging bags or corrugated cardboard.

3. Process according to any one of claims 1 and 2, characterised in that it consists in utilising a mixture of papers of which at least some comprise unbleached long fibres containing lignin.

4. Process according to any one of claims 1 to 3, characterised in that the mixture of papers contains about one third old newspapers, one third magazines or illustrated magazines, and one third packaging bags or corrugated cardboard.

5. Process according to claim 1, characterised in that, at the time of the reaction of the mixture of papers in pulp form with ozone, the pH is lowered to the desired value by the addition of sulphuric acid.

6. Process according to any one of claims 1 to 5, characterised in that, with a view to the reaction of the mixture of papers in pulp form with ozone, the ozone is introduced into the reactor in a mixture with oxygen.
